# EUROPEAN PATENT APPLICATION

(11) **EP 1 527 676 A2**
(43) Date of publication of application: **04.05.2005**
(21) Application number: 04105371.1
(22) Date of filing: 28.10.2004
(51) Int. Cl.: A01G 9/02

(54) **Pot and method for growing an epiphyte**

(30) Priority: 29.10.2003 NL 1024651; 04.11.2003 BE 200300591
(71) Applicant: Novabouw, 9090 Melle (BE)
(72) Inventor: VAN HELLEPUTTE, Gino, 9090, Melle (BE)
(74) Representative: Van Reet, Joseph

(57) **Abstract**

The pot has a bottom (1) and at least one side wall (3) with a height H. The bottom (1) is provided with apertures (6, 11), at least a number of which apertures ensure that virtually no water remains standing on the bottom of the pot. For the growing of an epiphyte, particularly of a Phalaenopsis, the pot containing the epiphyte potted in a light, coarse-grained substrate is placed on a grille above a heating system, in such a way that the heated air can rise through the grille until it is against the bottom (1) of the pot. In order to make the root environment dry out more quickly after watering, for the purpose of preventing growth retardation and/or root rot, the bottom (1) of the pot has a virtually centrally situated indentation (9) provided with one or more apertures (6), at least one of which extends to at least 10 % of the height H. The indentation (9) itself extends to at least 20 % of the height H.

## Description

The present invention relates to a pot for growing a plant, particularly an epiphyte, and more particularly a Phalaenopsis, which pot has a bottom, a top edge and at least one side wall extending between the bottom and the top edge, the abovementioned bottom having at least a lowest zone and at least a higher zone, and being further provided with apertures which have a total surface area amounting to at least 10 % of the internal cross section of the pot at the level of the abovementioned lowest zone of the bottom, and at least a number of which apertures ensure that virtually no water remains standing on the bottom of the pot, and the abovementioned top edge being situated at a height H above the lowest zone of the bottom. The invention further relates to a method for growing a plant in such a pot filled with substrate, particularly to a method for growing an epiphyte in said pot, in which the pot containing the epiphyte potted in a light, coarse-grained substrate during the propagation is placed on a grille above a heating system in such a way that air heated by the heating system can rise through the grille until it is against the bottom of the pot. The coarse-grained substrate in this case preferably consists of at least 80 per cent by weight, and more preferably at least 90 wt.- %, of particles of a size greater than 5 mm, and preferably greater than or equal to 7 mm.

Epiphytes are plants which grow on other plants without taking food from the latter. They generally grow in tropical regions, where they not only have the necessary heat available to them, but also receive regular (almost daily) rain showers. Their aerial roots are therefore subjected to cyclical periods of saturation and drying by air currents. Commercially important epiphytes grown in pots are orchids belonging to the Cattleya, Phalaenopsis and Dendrobium families, the most important ones belonging to the Phalaenopsis family.

In practice, a Phalaenopsis is propagated in a pot for about one year. In order to ensure that the roots are aerated as much as possible, the plants are potted in a light, open-textured, coarse-grained substrate, such as ground tree bark. The bottom of the pot is provided with apertures, which ensure that after the plants have been watered no water remains standing on the bottom, and which also ensure that the roots are aerated in such a way that they can dry out. In the case of Phalaenopsis it is in fact very important that the roots do not remain constantly wet, since this will slow down growth and the roots will also quickly rot.

In order to speed up the drying of the roots, in practice the pots are placed on a grille, particularly on a mesh bottom, below which heating pipes are provided. The roots can therefore dry out through the apertures in the bottom of the pot. In a pot which is commercially available the apertures are placed in a circle, in the lowest zone of the bottom, and higher zones are provided between the apertures in order to promote the drainage of the water towards the apertures. Despite this shaping of the bottom of the pot and the use of a light, open-textured, coarse-grained substrate, problems remain in practice with growth retardation and/or root rot as a result of the root environment being too moist.

In US-A-4 117 628 an attempt was made to solve this problem by inserting the epiphyte with its aerial roots through a polystyrene plate into a pot without a bottom, in such a way that the roots of the plant hang free in the air. However, such a system is complex and, compared with potting an epiphyte in a coarse-grained substrate, fastening an epiphyte on such a system is a laborious operation.

The object of the invention is therefore to offer another possibility for helping to solve the problem of growth retardation and/or root rot as the result of too moist a root environment.

To this end, the pot according to the invention is characterized in that the bottom of the pot has a virtually centrally situated indentation in which one or more of the abovementioned apertures are provided, at least one of which apertures extends to at least 10 % of the height H, the aperture or apertures in the indentation forming at least 5 %, preferably at least 10 %, of the surface area of said indentation, and the indentation extending to at least 20 % of the height H.

It was found that the use of such a pot reduced the risk of growth retardation and/or root rot, and not only for epiphytes, but also for other plants which are not grown on grilles above a heating system, but as usual on a flat surface. The presence of the indentation enables the roots to dry out more quickly after watering. This accelerated drying can be explained, on the one hand, by the fact that the volume of the pot is slightly reduced. On the other hand, the volume of substrate and roots situated in the lowest zone of the pot is reduced by the presence of the indentation, and this volume of substrate/roots is aerated and dried in a more efficient manner. In the case of the technique described above for growing epiphytes in pots on a grille above a heating system it was further found that the drying out is also substantially speeded up by the fact that the rising warm air is retained in the indentation and can rise between the coarse grains of the substrate in the pot itself, in such a way that the moisture can be removed in an even more efficient manner. This is because the moisture in the bottom of the pot now no longer needs to be removed mainly through the apertures in the bottom, but can be removed along with the air rising through the substrate.

In a preferred embodiment of the pot according to the invention the indentation has a minimal volume, and more specifically the indentation takes up a volume of at least 3 %, preferably at least 5 %, of a portion of the pot determined by the inside of the abovementioned side wall and by a contact face extending perpendicularly to the longitudinal axis of the pot on the lowest zone of the bottom and a contact face likewise extending perpendicularly to the longitudinal axis of the pot on the top side of the indentation. The greater the volume of the indentation, the more pronounced is its effect on the drying out of the root environment. In order to ensure the minimum of hindrance when potting the plants, it is preferable for the volume taken up by the indentation to be a maximum of 35 %, preferably a maximum of 25 %, and more preferably a maximum of 15 %, of the volume of the bottom portion of the pot described above.

In a further preferred embodiment of the pot according to the invention the indentation has a base surface with a surface area that is greater than 10 % of the cross section of the pot at the level of the abovementioned lower zone of the bottom, and preferably greater than 15 % of said cross section. When plants are being grown on a grille above a heating system a greater base surface allows more warm, rising air to be retained, and in this way contributes to a more rapid drying out of the root environment.

In yet a further preferred embodiment of the pot according to the invention the abovementioned top edge of the pot projects laterally from the side wall, and the laterally projecting top edge has an underside which is situated virtually in one flat plane or is directed upwards in such a way that the distance from a flat plane passing through the connection between the underside of the projecting top edge and the side wall increases from said side wall to the free end of the projecting top edge and/or remains constant.

An advantage of this embodiment in the growing of epiphytes is that a pot with such an edge in this application makes an important contribution towards solving the problem of attacks by aphids, and particularly by mealy bugs such as the woolly aphid. Owing to the presence of their water-repellent wool or wax layer, such mealy bugs are difficult to control. An adequate quantity of the pesticide must be applied to the mealy bugs in order to control them. According to the invention, it has now been found that in practice pots with downward-directed or curled top edges are generally used during the growing of Phalaenopsis and that aphids conceal themselves underneath these top edges and are difficult to reach with the sprayed pesticides. It is therefore often found that aphids are soon back on the leaves again after spraying. By now either keeping the underside of the laterally projecting top edges flat or directing them upwards, it can be ensured that fewer bugs conceal themselves underneath this edge in the first place, and these bugs can also be better controlled.

Further advantages and details of the invention will emerge from the description which follows of a preferred embodiment of a pot and a method according to the invention. This description is, however, given only as an example and is not intended to limit the scope of protection, as determined by the claims. The reference numerals given in the description refer to the appended drawings, in which:

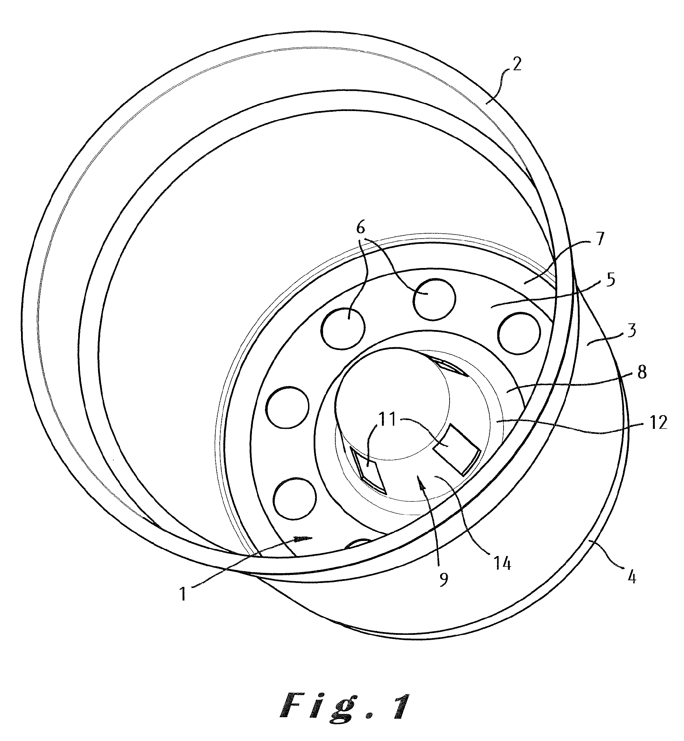

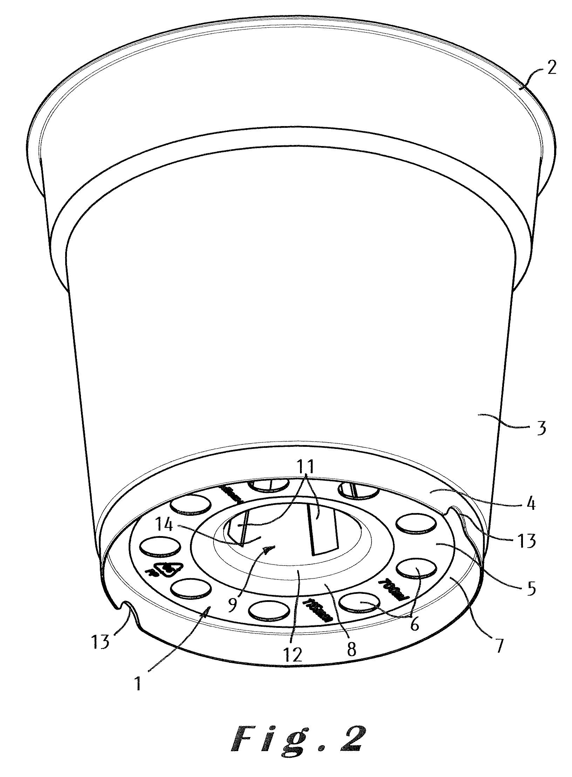

Figures 1 and 2 show a perspective view of a pot according to the invention;

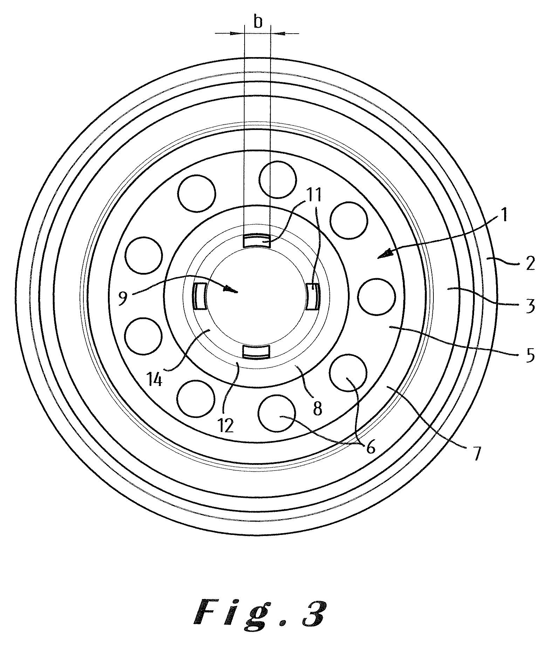

Figure 3 shows a top view of the pot according to Figures 1 and 2; and

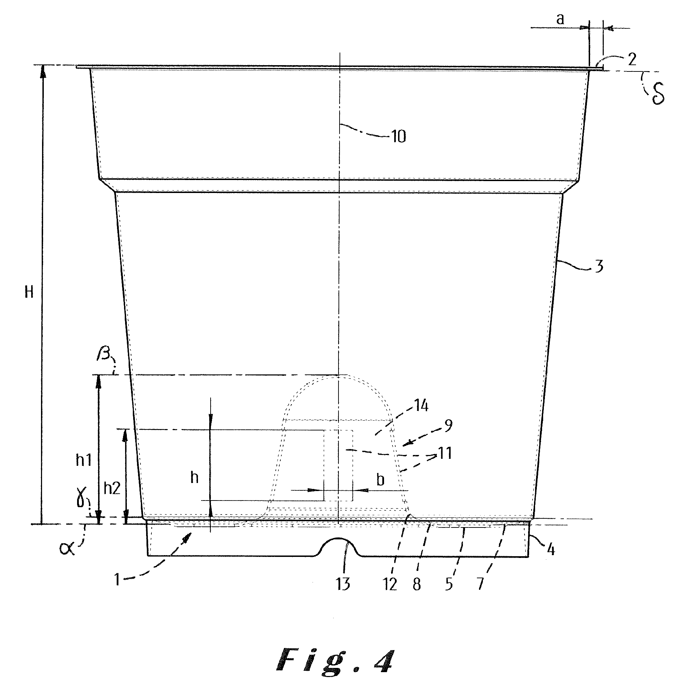

Figure 4 shows on a larger scale a side view of said pot.

In general, the invention relates to a pot for growing plants, particularly epiphytes, and more particularly the Phalaenopsis species. The invention also relates to a method for growing plants in a pot according to the invention, and particularly to a method for growing epiphytes in such a pot.

In practice, epiphytes, and particularly the Phalaenopsis species, are grown in pots which are placed on a grille, under which a heating system is provided. The grille is formed by, for example, a mesh, while the heating system consists of heating pipes. Since the person skilled in the art is familiar with such a system, it will not be described or illustrated in any further detail here. Other plants are generally grown on a flat surface such as on a concrete floor, a sand bed, a plastic film, a ground sheet or an anti-root foil, or on tables (with flood irrigation system for watering the plants).

As stated above, the object of the invention is to provide a pot which allows the root environment to dry out more quickly after watering, in order to ensure that growth retardation and/or root rot do not occur. Of course, the substrate with which the pot is filled also has an important effect on the drying out of the roots. For epiphytes a light, coarse-grained substrate is used in practice for potting the plants. This substrate preferably consists of at least 80 wt.-%, and most preferably at least 90 wt.-%, of particles that are of a size greater than 5 mm, i.e. of particles that are retained by a 5-mm screen. The substrate preferably consists of at least 95 wt.-% of particles that are of a size greater than or equal to 7 mm. The particles in this case have such a hardness that they are barely compressed in the pot. In practice, ground tree bark, for example, has proved to be effective. A 7 - 12 mm fraction, or a 12 - 18 mm fraction, of this ground bark is then used, for example, depending on the growth stage of the plant. Yet other materials may be added to the ground bark if desired, for example sphagnum. Such sphagnum is filiform and thus finer than tree bark. The advantage of a filiform, finer material is that this material remains homogeneously distributed between the coarser material and will therefore ensure that there is not a more compact layer in the bottom of the pot.

An important aspect of the invention for aerating/drying out the root environment is the pot itself which is used. A possible pot is shown in the figures. The pot shown is a round pot, but it is clear that rectangular, square or other pots are also possible. The pot consists substantially of a bottom 1, a side wall 3 extending between the top edge 2 of the pot and the bottom, and a peripheral edge 4 projecting below the bottom 4, on which peripheral edge the pot rests. The bottom 2 has a flat, circular lowest zone 5 provided with nine apertures 6. The number and shape of the apertures can, of course, vary. A sloping zone 7, 8 is provided both on the inside and on the outside of the lowest zone 5. The outside sloping zone 7 connects to the side wall 3, while the inside sloping zone 8 connects to a higher zone, more particularly to an indentation. The sloping zones 7 and 8 provide for drainage of the water into the apertures 6 and form an angle of less than 30° with a contact face α on the inside of the lowest zone 5, which contact face extends perpendicularly to the longitudinal axis 10 of the pot. Upward-sloping zones could also be provided between the apertures 6, but it was decided against this in order to keep the mould used for injection moulding of the pot simple in shape. Even without these additional sloping zones, the apertures 6 ensure that virtually no water remains standing on the bottom of the pot.

An important feature of the pot according to the invention is the presence of the inward-directed indentation 9 in the bottom 1 of the pot, which indentation is virtually centrally situated. This indentation extends to a height h₁ of the contact face α which is at least 20 % of the height H to which the top edge 2 extends above said contact face α (if, for example, the top edge is notched, the height H must be measured at the lowest level of the top edge, more particularly at the level to which the pot will normally be filled with substrate). The height h₁ is preferably greater than or equal to 25 % of the height H. In order to ensure as little hindrance as possible when potting the plant, the height h₁ is preferably a maximum of 40 % of the height H, and more preferably a maximum of 35 %. In the preferred embodiment shown in the figures the height h₁ is, for example, approximately 30 % of the height H.

According to the invention, one or more apertures 11 are provided in the indentation 9, at least one of which apertures extends to a height h₂ which is at least 10 %, preferably at least 15 %, of the height H. In the pot illustrated the indentation 9 is provided with four rectangular apertures 11, with a height h and a breadth b, which extend to approximately 17 % of the height H. Although such is in fact preferable, no aperture was made in the top of the indentation 9, on account of the fact that the plastic of the pot was injected on the top of the indentation, in order to simplify the injection moulding of the pot. If desired, however, such an aperture is simple to provide afterwards. The aperture or apertures in the top can be situated in a virtually horizontal position. The other apertures in the indentation can also be in a virtually horizontal position, particularly if the side wall of the indentation has a step. Such horizontal apertures also extend, of course, to a certain height if they are situated at this height.

All together, the apertures 6 and 11 in the bottom 1 of the pot have a surface area of at least 10 %, and preferably at least 15 %, of the internal cross section of the pot at the level of the lowest zone 5 of the bottom 1, more particularly at the level of the bottom edge of the side wall 3. In the embodiment illustrated the total surface area of the apertures 6 and 11 is approximately 17 % of said cross section. The presence of the indentation 9 makes it easier to provide a greater surface area of apertures in the bottom 1 of the pot. The apertures 11 in the indentation itself have a total surface area covering at least 5 %, and preferably at least 10 %, of the surface area of the indentation 9. In this way the warm air which is trapped in the indentation has a sufficiently large surface area to penetrate into the substrate in the pot and in this way remove the moisture. During the growing of epiphytes on a grille above a heating system the presence of the indentation thus means that the heat transfer occurs to a significantly greater extent through convection instead of largely through thermal conductivity. The convection currents enable the moisture to be removed more efficiently through the substrate in the pot.

In the pot illustrated the indentation 9 is of such a size that the moisture removal is improved without, however, being too great a hindrance during the potting of the plants. The size of the indentation 9 can be expressed relative to the volume of the lowest part of the pot, more particularly relative to the volume of a portion of the pot which is bounded by the inside of the side wall 3, by the contact face α on the inside of the lowest zone of the bottom 1, and by a contact face β which is parallel to the latter on the top of the indentation 9, and which is therefore also perpendicular to the longitudinal axis 10 of the pot. The indentation preferably takes up at least 3 % of said volume, and more preferably at least 5 % of said volume, the indentation, however, preferably taking up only a maximum of 35 %, more preferably a maximum of 25 %, and most preferably a maximum of 15 % of the volume of the lowest portion of the pot. In the pot illustrated the indentation, for example, takes up approximately 7 to 8 % of said volume. Notwithstanding such a relatively small volume of the indentation 9, a significant effect on the drying out of the root environment can still be obtained.

In order to ensure that for a given volume of the indentation 9 as little hindrance as possible is encountered for potting of the plants and for providing the apertures 6 around the indentation 9, it is preferable for the indentation 9 to have a side face 14 which is directed sufficiently steeply, and which more particularly forms an angle of greater than 60°, and preferably greater than 70°, with the contact face α. In order to make it possible for the pots to be stacked inside one another, this angle is less than 90°. In the pot illustrated the side face of the indentation 9 forms an angle of approximately 80° with the contact face α.

With regard to the volume taken up by the indentation, it should also be said that the volume below the sloping zone 8 is not counted towards the volume of the indentation. The indentation begins only when, from the contact face α onwards, the angle of slope from the bottom relative to said contact face becomes greater than 30°. In the pot illustrated the actual indentation begins only at the level of the rounded transition 12 between the sloping zone 8 and the steep wall of the indentation.

During the growing of plants on a grille above a heating system the rising warm air penetrates through the underside of the pot into the indentation 9. The quantity of rising warm air going into the indentation is partly determined by the surface area of the base surface χ of the indentation, in other words of the internal cross section from the point at which the bottom of the pot forms an angle greater than 30° with the contact face α. The surface area of said base surface is preferably greater than 10 % of the cross section of the pot at the level of the lowest zone 5 of the bottom, and more preferably greater than 15 % of said cross section. In order further to provide sufficient space around the indentation for the roots and for the apertures 6, the surface area of the base surface of the indentation 9 is preferably less than 60 % of the cross section of the pot at the level of the lowest zone 5 of the bottom 1, more preferably less than 40 %, and most preferably less than 30 % of said cross section.

In order to keep the rising warm air as far as possible below the bottom 1 of the pot, the peripheral edge 4 projecting below the bottom is preferably of a height greater than 5 mm, and more preferably greater than or equal to 7 mm, and this edge 4 is provided with lateral apertures 13 whose surface area in total is less than 10 %, preferably less than 5 %, of the total surface area of the peripheral edge 4. It has been found that such smaller apertures, of which only two are preferably provided, permit sufficient moisture removal when the pot is subsequently placed by the consumer on a flat base, or even if the pot is used for growing plants on flat tables.

As already indicated above, the pot according to the invention is preferably made of plastic, and more particularly by means of an injection moulding process. The side walls of the pot and the indentation are in this case disposed at such an angle that the pots are easily stacked (nested) in each other. The stack height in this case is determined by the thickness of the bottom and the height of the peripheral edge projecting below said bottom, and is not influenced by the presence of the indentation.

With regard to the size of the pot, it can further be said that the capacity of said pot is generally between 0.3 and 31, and more particularly between 0.5 and 21.

In connection with the problem outlined in the introduction concerning the control of aphids in the case of epiphytes, particularly of woolly aphids, the top edge of the pot, which projects laterally in order to provide additional strength, is entirely flat in the embodiment illustrated. In this way the aphids have less of a tendency to conceal themselves below this edge, and furthermore they are easier to reach with the pesticides. Instead of a top edge 2 with an underside situated in a flat plane δ, it is also possible to provide a top edge whose underside is directed upwards and outwards or consists of an alternation of flat and upward-directed parts. In this latter case the distance between the underside of the projecting top edge and the plane δ passing through the connection of the underside of the top edge and the side wall increases and/or remains constant. In practice, the top edge will normally project laterally over a distance a of at least 2 mm from the side wall.

### Example

A possible pot according to the invention has the appearance shown in the figures and has, for example, the following dimensions:
- capacity: 700 ml
- height H: 10 cm
- diameter of the pot at the level of the bottom: 8.3 cm
- diameter of the base surface χ of the indentation: 3.1 cm
- height h₁: 3.0 cm
- height h₂: 1.7 cm
- diameter of apertures 6: 0.9 cm
- dimensions of apertures 11: 0.6 x 1.5 cm
- overhang a of the top edge 2: 3 mm.

### Comparative test

Phalaenopsis plants were propagated in a greenhouse in pots according to the invention, with the dimensions specified above, and in comparable pots without indentation in the bottom. The pots in both cases were transparent, so that the roots could be seen through the side wall. The pots were all standing on a grille above heating pipes. The plants were watered every six days.

A first finding was that the pots with the indentations remained much brighter, which can be explained by the fact that the substrate dried out more quickly in the pots. It was found from earlier research that the more transparent the pot, the more the roots remain in the pot. In the case of a non-transparent pot the roots grow over the edge of the pot and often seek food in an adjacent pot. That is tiresome because the plants have to be pulled apart when they are being spaced more widely. This results not only in more work, but also in damage to the roots.

During the growing of the plants the moisture content in a pot with indentation and in a pot without indentation was also measured continuously for a period of 10 days using a tensiometer (Growlab). Between two waterings the following values (in hPa) were measured:

| Day after watering | Pot with indentation | Pot without indentation | Difference |
|---|---|---|---|
| 1 | 10 | 12 | -2 |
| 2 | 30 | 41 | -11 |
| 3 | 63 | 66 | -3 |
| 4 | 89 | 77 | +12 (+16%) |
| 5 | 125 | 93 | +33 (+34%) |
| 6 | 166 | 104 | +62 (+60%) |

It is clear that the great differences occur three days after watering. The pot with indentation dries out more quickly then. The regular drying out of the substrate is an advantageous situation for good root growth. In the growing of Phalaenopsis it is very important to have sufficient oxygen in the substrate, in order to achieve a good root climate. This is why the plant is not grown in ordinary potting compost, but in a coarse bark substrate. Growing the plants in conditions which are too wet quickly gives rise to loss of root tips. It is important for the substrate to dry out well in the pot in order to ensure that sufficient oxygen can be provided to the aerial roots. The pot with indentation gives a drier substrate, which is advantageous for the oxygen supply to the roots. It appears more specifically from the measurements that the substrate of the pot with the indentation 6 has dried out 60% more than the pot without the indentation 6 days after watering, i.e. before the next watering. This may also permit the watering sessions to follow one another more rapidly and in this way speed up the development of the plants and even better approximate the natural growing conditions.

## Claims

1. Pot for growing a plant, particularly an epiphyte, which pot has a bottom (1), a top edge (2) and at least one side wall (3) extending between the bottom and the top edge, the abovementioned bottom (1) having at least a lowest zone (5) and at least a higher zone (7, 8, 9), and being provided with apertures (6, 11) which have a total surface area amounting to at least 10 % of the cross section of the pot at the level of the abovementioned lowest zone (5) of the bottom, and at least a number of which apertures ensure that virtually no water remains standing on the bottom (1) of the pot, and the abovementioned top edge (2) being situated at a height H above the lowest zone (5) of the bottom (1), **characterized in that** the bottom (1) of the pot has a virtually centrally situated indentation (9) in which one or more of the abovementioned apertures (11) are provided, at least one of which apertures extends to at least 10 % of the height H, the aperture or apertures (11) in the indentation (9) forming at least 5 %, preferably at least 10 %, of the surface area of said indentation, and the indentation (9) extending to at least 20 % of the height H.

2. Pot according to Claim 1, **characterized in that** a portion of the pot, determined by the inside of the abovementioned side wall (3) and by a contact face (α) extending perpendicularly to the longitudinal axis (10) of the pot on the lowest zone (5) of the bottom and a contact face (β), likewise extending perpendicularly to the longitudinal axis (10) of the pot on the top side of the indentation (9), has a predetermined volume of which at least 3 %, preferably at least 5 %, is taken up by the indentation (9).

3. Pot according to Claim 1 or 2, **characterized in that** a portion of the pot, determined by the inside of the abovementioned side wall (3) and by a contact face (α) extending perpendicularly to the longitudinal axis (10) of the pot on the lowest zone (5) of the bottom and a contact face (β), likewise extending perpendicularly to the longitudinal axis (10) of the pot on the top side of the indentation (9), has a predetermined volume of which a maximum of 35%, preferably a maximum of 25 %, and more preferably a maximum of 15 %, is taken up by the indentation (9).

4. Pot according to one of Claims 1 to 3, **characterized in that** the indentation (9) has a base surface (χ) with a surface area that is greater than 10 % of the cross section of the pot at the level of the abovementioned lowest zone (5) of the bottom (1), and preferably greater than 15 % of said cross section.

5. Pot according to one of Claims 1 to 4, **characterized in that** the indentation (9) has a base surface (χ) with a surface area that is less than 60 % of the cross section of the pot at the level of the abovementioned lowest zone (5) of the bottom (1), and preferably less than 40 %, and more preferably smaller than 30 %, of said cross section.

6. Pot according to one of Claims 1 to 5, **characterized in that** the indentation (9) has at least one side face (14) which forms an angle greater than 60°, and preferably greater than 70°, with a contact face (α) extending perpendicularly to the longitudinal axis (10) of the pot on the lowest zone (5) of the bottom (1).

7. Pot according to one of Claims 1 to 6, **characterized in that** the indentation (9) has a base surface (χ), and **in that** the bottom (1) has a zone (8) sloping from said lowest zone (5) to said base surface (χ), which sloping zone extends at an angle of less than 30° relative to a contact face (α) extending perpendicularly to the longitudinal axis (10) of the pot on the lowest zone (5) of the bottom (1).

8. Pot according to one of Claims 1 to 7, **characterized in that** the total surface area of the apertures (6, 11) in the bottom (1) of the pot is at least 15 % of the cross section of the pot at the level of the abovementioned lower zone (5) of the bottom.

9. Pot according to one of Claims 1 to 8, **characterized in that** at least one of the apertures (11) in the indentation (5) extends to at least 15 % of the height H, preferably at least one aperture being provided in the top of the indentation (9).

10. Pot according to one of Claims 1 to 9, **characterized in that** the indentation (9) extends to at least 25 % of the height H.

11. Pot according to one of Claims 1 to 10, **characterized in that** the indentation (9) extends to a maximum of 40 % of the height H, and preferably to a maximum of 35 % of said height H.

12. Pot according to one of Claims 1 to 11, **characterized in that** it is provided underneath with a peripheral edge (4) projecting below the bottom and having a height greater than 5 mm, preferably a height greater than or equal to 7 mm, in which peripheral edge one or more lateral apertures (13) with a total surface area of less than 10 %, preferably less than 5 %, of the surface area of the peripheral edge are provided (4).

13. Pot according to one of Claims 1 to 12, **characterized in that** the abovementioned top edge of the pot projects laterally from the side wall, and **in that** the laterally projecting top edge has an underside which is situated virtually in one flat plane or is directed upwards in such a way that the distance from a flat plane passing through the connection between the underside of the projecting top edge and the side wall increases from said side wall to the free end of the projecting top edge and/or is constant.

14. Pot according to one of Claims 1 to 13, **characterized in that** it has a capacity lying between 0.3 and 3 l, and particularly between 0.5 and 2 l.

15. Pot according to one of Claims 1 to 14, **characterized in that** at least the side wall (3) is transparent.

16. Method for growing a plant, **characterized in that** the plant is grown in a pot filled with substrate, according to one of Claims 1 to 15.

17. Method according to Claim 16, **characterized in that** an epiphyte, particularly a Phalaenopsis, is grown in said pot, in which method the pot containing the epiphyte potted in a light, coarse-grained substrate during the growing is placed on a grille above a heating system, in such a way that air heated by the heating system can rise through the grille until it is against the bottom (1) of the pot.

18. Method according to Claim 17, **characterized in that** for potting of the epiphyte use is made of a light, coarse-grained substrate which consists of at least 80 wt.-%, preferably at least 90 wt.-%, of particles of a size greater than 5 mm, and preferably greater than or equal to 7 mm.

19. Method for growing an epiphyte, particularly a Phalaenopsis, in a pot which has a bottom (1), at least one side wall (3) extending from the bottom, and a top edge (2) extending laterally from the side wall, in which method the pot containing the epiphyte potted in a light, coarse-grained substrate during growing is placed on a grille above a heating system, in such a way that the heated air can rise through the grille until it is against the bottom (1) of the pot, **characterized in that** the laterally projecting top edge (2) has an underside which is situated virtually in one flat plane or is directed upwards in such a way that the distance from a flat plane passing through the connection between the underside of the projecting top edge (2) and the side wall (3) increases from said side wall to the free end of the projecting top edge and/or is constant.

20. Method according to Claim 19, **characterized in that** the top edge (2) projects laterally over a distance of at least 2 mm from the side wall (3).
